(19) Europäisches Patentamt
European Patent Office
Office européen des brevets

(11) **EP 4 546 640 A1**

(12) **EUROPEAN PATENT APPLICATION**
published in accordance with Art. 153(4) EPC

(43) Date of publication:
**30.04.2025 Bulletin 2025/18**

(21) Application number: **23879837.5**

(22) Date of filing: **18.10.2023**

(51) International Patent Classification (IPC):
***H02P 27/08*** *(2006.01)*

(52) Cooperative Patent Classification (CPC):
**H02P 27/08**

(86) International application number:
**PCT/JP2023/037732**

(87) International publication number:
**WO 2024/085194 (25.04.2024 Gazette 2024/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.10.2022 JP 2022167704**

(71) Applicant: **IHI Corporation**
**Tokyo 135-8710 (JP)**

(72) Inventors:
- **YAMAGUCHI, Koji**
  **Tokyo 135-8710 (JP)**
- **KATSURA, Kenshiro**
  **Tokyo 135-8710 (JP)**
- **NOTAKE, Koki**
  **Tokyo 135-8710 (JP)**
- **SUGAWARA, Hirotaka**
  **Tokyo 135-8710 (JP)**
- **HISAMOCHI, Hirofumi**
  **Tokyo 135-8710 (JP)**
- **SHIMOTSU, Takuya**
  **Tokyo 135-8710 (JP)**

(74) Representative: **TBK**
**Bavariaring 4-6**
**80336 München (DE)**

(54) **ELECTRIC MOTOR OPERATION DEVICE**

(57) A motor drive device includes an inverter electrically connected to a motor having an air bearing, and an inverter control unit that provides the inverter with a PWM control signal according to a pulse width modulation method to control the operation of the inverter. The inverter control unit outputs a PWM control signal including a carrier wave set to a pre-levitation frequency to the inverter when the air bearing is not in a levitation rotation speed range. The inverter control unit outputs a PWM control signal including a carrier wave set to a post-levitation frequency to the inverter when the air bearing is in the levitation rotation speed range. The pre-levitation frequency is lower than the post-levitation frequency.

***Fig.1***

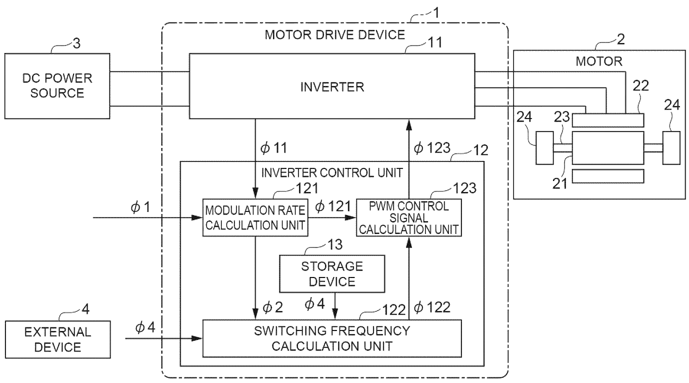




Processed by Luminess, 75001 PARIS (FR)

# Description

## Technical Field

The present disclosure relates to an electric machine operating apparatus.

## Background Art

Patent Literature 1 discloses a technology related to a motor, which is an electric machine. The motor of Patent Literature 1 has a thrust bearing composed of a support and a thrust magnet.

## Citation List

## Patent Literature

Patent Document 1: Japanese Unexamined Patent Publication No. 10-225079

## Summary of Invention

## Technical Problem

An electric machine receives electric power from an external device. The electric machine provides the generated electric power to the external device. Inside the electric machine, parasitic circuits may be generated through multiple components forming the electric machine. If an unintended voltage is generated in the parasitic circuit, an unintended current flows through the parasitic circuit. If an unintended current flows between multiple components forming the electric machine, it causes deterioration of the components forming the electric machine.

The present disclosure describes an electric machine operating apparatus that suppresses the deterioration of components forming the electric machine.

## Solution to Problem

An electric machine operating apparatus according to one embodiment of the present disclosure includes a power conversion unit electrically connected to an electric machine having a fluid bearing and configured to operate according to a pulse control method, and a control unit configured to provide a control signal to the power conversion unit to control the operation of the power conversion unit. The control unit outputs the control signal including a carrier wave of a first frequency to the power conversion unit when the fluid bearing is not in a levitation support state, and outputs the control signal including a carrier wave of a second frequency to the power conversion unit when the fluid bearing is in the levitation support state. The first frequency is lower than the second frequency.

The electric machine operating apparatus sets the frequency of the carrier wave forming the control signal provided to the power conversion unit when the fluid bearing is not in a levitation support state to be lower than the frequency of the carrier wave forming the control signal provided to the power conversion unit when the fluid bearing is in a levitation support state. As a result, the frequency of occurrence of shaft current (axial current) between the fluid bearing and the rotation shaft supported by the fluid bearing is reduced. Therefore, the deterioration of components due to shaft current can be suppressed.

The control unit of the above electric machine operating apparatus may include a first calculation unit configured to set a modulation rate of the control signal, a second calculation unit configured to set a frequency of the carrier wave, and a third calculation unit configured to obtain the control signal using the modulation rate set by the first calculation unit and the frequency of the carrier wave set by the second calculation unit. The control unit can provide the power conversion unit with a control signal that can suppress the deterioration of components caused by shaft current.

The second calculation unit of the above electric machine operating apparatus may set the frequency of the carrier wave to either the first frequency or the second frequency using information on the rotation speed (rotational speed, rotation rate, rotational rate, number of revolutions) of a rotation shaft of the electric machine supported by the fluid bearing. Whether the fluid bearing is in a levitation support state or not is related to the rotation speed. Therefore, the second calculation unit can set the frequency of the carrier wave that can suppress the deterioration of components caused by shaft current using the rotation speed of the rotation shaft.

The second calculation unit of the above electric machine operating apparatus may set the frequency of the carrier wave to the first frequency when the rotation speed is within a non-levitation rotation speed range and a margin rotation speed range. The non-levitation rotation speed range is less than the levitation rotation speed which is predetermined. The margin rotation speed range is less than a margin rotation speed and greater than or equal to the levitation rotation speed. The margin rotation speed is greater than or equal to the levitation rotation speed. The second calculation unit may set the frequency of the carrier wave to the second frequency when the rotation speed is within a levitation rotation speed range that is greater than or equal to the margin rotation speed. The second calculation unit can set the frequency of the carrier wave that can suppress the deterioration of components due to shaft current even during the transition from a non-levitation support state to a levitation support state.

The second calculation unit of the above electric machine operating apparatus may set the first frequency to a first constant value not depending on (independent from) the rotation speed when the rotation speed is within the non-levitation rotation speed range and the margin rotation speed range. The second calculation unit may set the second frequency to a second constant value not depending on the rotation speed when the rotation speed is within the levitation rotation speed range. The first constant value may be smaller than the second constant value. The second calculation unit can readily set the frequency of the carrier wave.

The second calculation unit of the above electric machine operating apparatus may set the first frequency to a constant value not depending on the rotation speed when the rotation speed is within the non-levitation rotation speed range and the margin rotation speed range. The second calculation unit may set the second frequency to a value that increases in accordance with an increase of the rotation speed, using the first frequency as a starting value, when the rotation speed is within the levitation rotation speed range. The second calculation unit can set the frequency of the carrier wave according to the rotation speed when the fluid bearing is in a levitation support state.

The second calculation unit of the above electric machine operating apparatus may set the first frequency to a constant value not depending on the rotation speed when the rotation speed is within the non-levitation rotation speed range and the margin rotation speed range. The second calculation unit may set the second frequency to a value that increases in accordance with an increase of the rotation speed, using a value higher than the first frequency as a starting value, when the rotation speed is within the levitation rotation speed range. The second calculation unit can set the frequency of the carrier wave according to the rotation speed when the fluid bearing is in a levitation support state.

The second calculation unit of the above electric machine operating apparatus may set the first frequency to a constant value not depending on the rotation speed when the rotation speed is within the non-levitation rotation speed range and the margin rotation speed range. The second calculation unit may set at least a first levitation rotation speed range and a second levitation rotation speed range higher than the first levitation rotation speed range when the rotation speed is within the levitation rotation speed range. The second calculation unit may set the second frequency to a first constant value not depending on the rotation speed and higher than the first frequency when the rotation speed is within the first levitation rotation speed range. The second calculation unit may set the second frequency to a second constant value not depending on the rotation speed and higher than the first constant value when the rotation speed is in the second levitation rotation speed range. The second calculation unit can readily set the frequency of the carrier wave when the fluid bearing is in a levitation support state.

The second calculation unit of the above-described electric machine operating apparatus may set the first frequency to a constant value not depending on the rotation speed when the rotation speed is within the non-levitation rotation speed range and the margin rotation speed range. The second calculation unit may set at least a first levitation rotation speed range and a second levitation rotation speed range higher than the first levitation rotation speed range when the rotation speed is within the levitation rotation speed range. The second calculation unit may set the second frequency to a first constant value not depending on the rotation speed and higher than the first frequency when the rotation speed is within the first levitation rotation speed range. The second calculation unit may set the second frequency to a value that increases in accordance with an increase of the rotation speed, using the first constant value as a starting value, when the rotation speed is in the second levitation rotation speed range. The second calculation unit may set the frequency of the carrier wave according to the rotation speed when the fluid bearing is in a levitation support state.

The second calculation unit of the above-described electric machine operating apparatus may set the first frequency to a value that increases in accordance with an increase of the rotation speed when the rotation speed is within the non-levitation rotation speed range and the margin rotation speed range. The second calculation unit may set the second frequency to a value that increases in accordance with an increase of the rotation speed, using the first frequency as a starting value, when the rotation speed is within the levitation rotation speed range. The second calculation unit can set the frequency of the carrier wave according to the rotation speed when the fluid bearing is not in a levitation support state. The second calculation unit can also set the frequency of the carrier wave according to the rotation speed when the fluid bearing is in a levitation support state.

The control unit of the above-described electric machine operating apparatus may set the frequency of the carrier wave to either the first frequency or the second frequency using information on a rotation speed of a rotation shaft of the electric machine supported by the fluid bearing and a relationship between the rotation speed and the frequency of the carrier wave. The control unit may obtain information defined by a non-levitation rotation speed range defined by an upper limit non-levitation rotation speed (Nr) and a levitation rotation speed range defined by an upper limit levitation rotation speed (Nm). The relationship between the rotation speed and the frequency of the carrier wave may include a non-levitation ratio ((fswb - fswc) / Nr) defined by a difference (fswb - fswc) between a non-levitation maximum frequency (fswb) of the carrier wave when the fluid bearing is not in the levitation support state and a non-levitation minimum frequency (fswc) of the carrier wave when the fluid bearing is not in the levitation support state, and the predetermined upper limit non-levitation rotation speed (Nr); and a levitation ratio (fsw1 / Nm) defined by a levitation maximum frequency (fsw1) of the carrier wave when the fluid bearing is in the levitation support state and the upper limit levitation rotation speed (Nm) corresponding to the levitation maximum frequency (fsw1). The levitation ratio (fsw1 / Nm) may be greater than the non-levitation ratio ((fswb - fswc) / Nr).

The control unit may set the frequency of the carrier wave that can suppress the deterioration of components due to shaft current.

The control unit of the above-described electric machine operating apparatus may set the frequency of the carrier wave to either the first frequency or the second frequency using information on a rotation speed of a rotation shaft of the electric machine supported by the fluid bearing and a relationship between the rotation speed and the frequency of the carrier wave. The relationship between the rotation speed and the frequency of the carrier wave may satisfy a condition represented by the Equation (1).

[Equation 1]

$$\frac{\int_{N_c}^{N_m} f_2(N)dN}{N_m - N_c} > \frac{\int_{N_s}^{N_r} f_1(N)dN}{N_r - N_s} \cdots (1)$$

The Equation (1) includes an upper limit non-levitation rotation speed (Nr) indicating an upper limit of the rotation speed (N) of the rotation shaft when the fluid bearing is not in the levitation support state, a lower limit non-levitation rotation speed (Ns) indicating a lower limit of the rotation speed (N) of the rotation shaft when the fluid bearing is not in the levitation support state, a function ($f_1$ (N)) indicating a relationship between the rotation speed (N) of the rotation shaft when the fluid bearing is not in the levitation support state and the frequency of the carrier wave corresponding to the rotation speed (N) of the rotation shaft, with the rotation speed (N) of the rotation shaft as an independent variable and the frequency of the carrier wave as a dependent variable, an upper limit levitation rotation speed (Nm) indicating an upper limit of the rotation speed (N) of the rotation shaft when the fluid bearing is in the levitation support state, a lower limit levitation rotation speed (Nc) indicating a lower limit of the rotation speed (N) of the rotation shaft when the fluid bearing is in the levitation support state, and a function ($f_2$ (N)) indicating a relationship between the rotation speed (N) of the rotation shaft when the fluid bearing is in the levitation support state and the frequency of the carrier wave corresponding to the rotation speed (N) of the rotation shaft, with the rotation speed (N) of the rotation shaft as an independent variable and the frequency of the carrier wave as a dependent variable.

The control unit may set the frequency of the carrier wave that can suppress the deterioration of components due to shaft current.

The control unit of the above-described electric machine operating apparatus may include a signal acquisition unit configured to receive a signal indicating whether the rotation shaft of the electric machine supported by the fluid bearing is levitating or not. The second calculation unit may set the frequency of the carrier wave using the signal acquired by the signal acquisition unit. The control unit can set the frequency of the carrier wave that can suppress the deterioration of components due to shaft current without using the rotation speed.

An electric machine operating apparatus according to another embodiment of the present disclosure includes a power conversion unit electrically connected to an electric machine having a fluid bearing and configured to operate according to a pulse control method. The power conversion unit outputs a first output voltage pulse when the fluid bearing is not in a levitation support state. The power conversion unit outputs a second output voltage pulse when the fluid bearing is in the levitation support state. The frequency of the first output voltage pulse is lower than the frequency of the second output voltage pulse. The electric machine operating apparatus can suppress the deterioration of components due to shaft current.

In another embodiment of the electric machine operating apparatus, a time average value obtained by dividing a value obtained by time-integrating the frequency of the second output voltage pulse by a reference time may be smaller than a time average value obtained by dividing a value obtained by time-integrating the frequency of the first output voltage pulse by the reference time. With this configuration, the deterioration of components due to shaft current can be suppressed.

## Effects of Invention

According to the electric machine operating apparatus of the present disclosure, the deterioration of components constituting the electric machine can be suppressed.

## Brief Description of Drawings

FIG. 1 is a functional block diagram of a system including the electric machine operating apparatus of the first embodiment.

FIG. 2 is a diagram for explaining the operation of the switching frequency calculation unit.

FIG. 3A is a diagram for explaining a levitation support state. FIG. 3B is a diagram for explaining the touchdown state. FIG. 3C is a diagram for explaining shaft current generated when in a levitation support state. FIG. 3D is a diagram for explaining shaft current generated when in a touchdown state.

FIG. 4A is a diagram showing the output voltage pulses in the non-levitation state. FIG. 4B is a diagram showing the output voltage pulses in the levitation state.

FIG. 5A is a diagram for explaining the first modified example of the operation of the switching frequency calculation unit. FIG. 5B is a diagram for explaining the second modified example of the operation of the switching frequency calculation unit.

FIG. 6A is a diagram for explaining the third modified example of the operation of the switching frequency calculation unit. FIG. 6B is a diagram for explaining the fourth modified example of the operation of the switching frequency calculation unit.

FIG. 7 is a diagram for explaining the fifth modified example of the operation of the switching frequency calculation unit.

FIG. 8 is a diagram for explaining the sixth modified example of the operation of the switching frequency calculation unit.

FIG. 9 is a functional block diagram of a system including the electric machine operating apparatus of the seventh modified example.

FIG. 10 is a diagram for explaining the eighth modified example of the operation of the switching frequency calculation unit.

FIG. 11 is a diagram for explaining the ninth modified example of the operation of the switching frequency calculation unit.

## Description of Embodiments

Hereinafter, the electric machine operating apparatus of the present disclosure will be described in detail with reference to the accompanying drawings. In the description of the drawings, the same elements will be given the same reference numerals, and redundant description thereof will be omitted.

The electric machine operating apparatus of the embodiment is used for the operation of an electric machine. The electric machine may be a motor driven by receiving electric power. The electric machine may be a generator that generates electric power by receiving energy from the outside. In the following description, the electric machine is described as a motor 2 as shown in FIG. 1. The electric machine operating apparatus is a motor drive device 1 that converts the electric power received from a DC power source 3 into a mode of electric power required by the motor 2. The motor drive device 1 provides the converted electric power to the motor 2. The electric power received by the motor drive device 1 may be DC or AC.

The motor 2 includes a rotor 21 including a magnet and a stator 22 including a coil. The motor drive device 1 provides three-phase AC power to the coil of the stator 22. As a result, the rotor 21 rotates due to the interaction between the magnetic field generated by the coil of the stator 22 receiving the three-phase AC power and the magnetic field of the magnet of the rotor 21.

The rotor 21 is connected to a rotation shaft 23. A pair of air bearings 24 are provided at both ends of the rotation shaft 23. When the rotation shaft 23 rotates at a rotation speed (rotation rate, number of revolutions) higher than a predetermined rotation speed, the air bearings 24 support the rotation shaft 23 in a non-contact manner. The air bearings 24 are a type of fluid bearing. The air bearings 24 support the load acting on the rotation shaft 23 by the air pressure caused by the air entrained inside the bearings (see FIG. 3A).

When the rotation shaft 23 is in a rotating state, the outer peripheral surface 231 of the rotation shaft 23 does not contact the inner peripheral surface 242 of the bearing ring 241. An air layer 243 exists between the outer peripheral surface 231 of the rotation shaft 23 and the inner peripheral surface 242 of the bearing ring 241.

The air layer 243 formed on the lower vertical side is generated by the air entrained with the rotation of the rotation shaft 23. When the rotation shaft 23 is not rotating, the outer peripheral surface 231 of the rotation shaft 23 contacts the inner peripheral surface 242 of the bearing ring 241 (see FIG. 3B). The state where the outer peripheral surface 231 of the rotation shaft 23 contacts the inner peripheral surface 242 of the bearing ring 241 is referred to as the touchdown state S1.

Refer to FIG. 1 again. The motor drive device 1 includes an inverter 11 (power conversion unit) and an inverter control unit 12 (control unit).

The inverter 11 includes a circuit having multiple switching elements. By switching the ON and OFF states of the multiple switching elements, the inverter 11 converts DC power into three-phase AC power. The inverter 11 adopts a pulse control method. For example, the inverter 11 may adopt a pulse width modulation (PWM) method. The inverter 11 may adopt a pulse amplitude modulation (PAM) method. Hereinafter, the inverter 11 is described as adopting the pulse width modulation (PWM) method. A known power conversion circuit can be used for the power conversion circuit provided in the inverter 11. Thus, the detailed description of the inverter 11 is omitted.

The inverter control unit 12 is physically a computer. The inverter control unit 12 receives a control command value φ1 provided from the outside. The inverter control unit 12 receives a sensor detection value φ11 from the inverter 11. The inverter control unit 12 generates a PWM control signal φ123 for the inverter 11 using the control command value φ1 and the sensor detection value φ11. For example, the control target of the inverter 11 may be the rotation speed of the motor 2, the torque of the motor 2, or the position of the actuator.

The PWM control signal φ123 is a signal based on the pulse width modulation method. The PWM control signal φ123 is generated by a carrier wave component defined by a predetermined frequency and a modulation component derived from the control command value $\phi$ 1.

The inverter control unit 12 includes a modulation rate calculation unit 121 (first calculation unit), a switching frequency calculation unit 122 (second calculation unit), and a PWM control signal calculation unit 123 (third calculation unit) as functional components. The functional components forming the inverter control unit 12 are realized by executing a predetermined program on the CPU of the computer. The inverter control unit 12 may include other functional components not shown in FIG. 1.

The modulation rate calculation unit 121 obtains a modulation rate φ121 by calculation. The modulation rate calculation unit 121 receives the control command value φ1 from the outside of the motor drive device 1. The control command value φ1 may be, for example, a target value of the rotation speed of the motor 2. The modulation rate calculation unit 121 receives the sensor detection value φ11 from the inverter 11. The modulation rate calculation unit 121 calculates the modulation rate φ121 for PWM control using the control command value φ1 and the sensor detection value φ11. The modulation rate calculation unit 121 provides the modulation rate φ121 to the PWM control signal calculation unit 123. The modulation rate calculation unit 121 also provides the rotation speed information φ2, which indicates the rotation speed of the motor 2, to the switching frequency calculation unit 122.

The switching frequency calculation unit 122 sets the switching frequency φ122 for PWM control. The switching frequency φ122 is the frequency of the carrier wave in PWM control. The switching frequency calculation unit 122 sets the switching frequency φ122 using the rotation speed information φ2, which indicates the rotation speed of the motor 2, received from the modulation rate calculation unit 121. The switching frequency calculation unit 122 may also directly obtain the rotation speed information φ2 from an external source without going through the modulation rate calculation unit 121. The details of setting the switching frequency φ122 using the rotation speed information φ2 will be described later. The switching frequency calculation unit 122 provides the switching frequency φ122 to the PWM control signal calculation unit 123.

The PWM control signal calculation unit 123 obtains the PWM control signal φ123. The PWM control signal calculation unit 123 receives the modulation rate φ 121 from the modulation rate calculation unit 121. The PWM control signal calculation unit 123 receives the switching frequency φ122 from the switching frequency calculation unit 122. The PWM control signal calculation unit 123 obtains the PWM control signal φ123 using the modulation rate φ121 and the switching frequency φ122. The PWM control signal calculation unit 123 provides the PWM control signal φ123 to the inverter 11.

Hereinafter, the switching frequency calculation unit 122 will be described in detail. The term "calculation" here does not necessarily mean performing arithmetic operations such as addition, subtraction, multiplication, or division.

The switching frequency calculation unit 122 sets the switching frequency φ122 using information φ4 indicating the relationship between the rotation speed and the switching frequency. The information φ4 indicating the relationship between the rotation speed and the switching frequency can take various forms. For example, the information φ4 indicating the relationship between the rotation speed and the switching frequency may be a function with the rotation speed as the independent variable and the switching frequency as the dependent variable. The information φ4 indicating the relationship between the rotation speed and the switching frequency may be a table associating the rotation speed with the corresponding switching frequency. The information φ4 indicating the relationship between the rotation speed and the switching frequency may be a rotation speed-frequency map M1 as shown in FIG. 2. The vertical axis of the rotation speed-frequency map M1 indicates the switching frequency φ122. The horizontal axis indicates the rotation speed N. The rotation speed N includes a non-levitation rotation speed range N1, a margin (reserve, allowable) rotation speed range N2, and a levitation rotation speed range N3. The information φ4 indicating the relationship between the rotation speed and the switching frequency may be recorded in a storage device 13 provided in the inverter control unit 12, and the switching frequency calculation unit 122 may read the information φ4 indicating the relationship between the rotation speed and the switching frequency from the storage device 13 as needed. The information φ4 indicating the relationship between the rotation speed and the switching frequency may be provided from an external device 4 separate from the motor drive device 1.

Hereinafter, the switching frequency calculation unit 122 will be described as setting the switching frequency φ122 using the rotation speed-frequency map M1.

The non-levitation rotation speed range N1 is the range where the rotation speed N is from the lower limit non-levitation rotation speed Ns (e.g., zero) to less than the levitation rotation speed Nr (upper limit non-levitation rotation speed). The non-levitation rotation speed range N1 corresponds to the touchdown state S1 shown in FIG. 3B. In this case, the rotation shaft 23 rotates while contacting the inner peripheral surface 242 of the bearing ring 241. The levitation rotation speed Nr is a predetermined value. The levitation rotation speed Nr indicates the rotation speed N at which the rotation shaft 23 rotates in a levitation state. Specifically, the levitation rotation speed Nr may indicate the rotation speed N at which the levitation support state S2 shown in FIG. 3A is achieved. The levitation rotation speed Nr may indicate the rotation speed N at which the transition from the touchdown state S1 shown in FIG. 3B to the levitation support state S2 shown in FIG. 3A begins. The levitation rotation speed Nr may be obtained by calculation. The levitation rotation speed Nr may be obtained by experiments, measurements or calculations during operation.

The margin rotation speed range N2 is the range where the rotation speed N is greater than or equal to the levitation rotation speed Nr and less than the margin rotation speed Nc (lower limit levitation rotation speed). When the rotation speed N is within the margin rotation speed range N2, it may be in the levitation support state S2 shown in FIG. 3A, or it may be in the transition state from the touchdown state S1 shown in FIG. 3B to the levitation support state S2 shown in FIG. 3A. The margin rotation speed Nc is a margin (reserve, allowance) added to the levitation rotation speed Nr. The levitation rotation speed Nr is a value indicating that the rotation shaft 23 is levitating. However, "levitating" includes some uncertainty. Therefore, the margin rotation speed Nc, which is greater than the levitation rotation speed Nr, is set. When the rotation speed N is the margin rotation speed Nc or greater, the rotation shaft 23 is considered to be in the levitation support state S2 shown in FIG. 3A.

The levitation rotation speed range N3 is the range where the rotation speed N is greater than or equal to the margin rotation speed Nc. In the levitation rotation speed range N3, the levitation support state S2 shown in FIG. 3A is achieved.

The switching frequency calculation unit 122 sets the pre-levitation frequency fswa and the post-levitation frequency fsw0. The pre-levitation frequency fswa is lower than the post-levitation frequency fsw0. The pre-levitation frequency fswa is a constant value not depending on the rotation speed. The post-levitation frequency fsw0 is also a constant value not depending on the rotation speed N. The pre-levitation frequency fswa and the post-levitation frequency fsw0 may be determined from the viewpoint of control stability according to the rotation speed N.

The switching frequency calculation unit 122 sets the pre-levitation frequency fswa as the switching frequency φ122 when the rotation speed N indicated by the rotation speed information φ2 is within the non-levitation rotation speed range N1. Since the pre-levitation frequency fswa is a constant value not depending on the rotation speed, the switching frequency φ122 is always a constant value (pre-levitation frequency fswa) when the rotation speed N is within the non-levitation rotation speed range N1. The switching frequency calculation unit 122 also sets the pre-levitation frequency fswa as the switching frequency φ122 when the rotation speed N indicated by the rotation speed information φ2 is within the margin rotation speed range N2. The switching frequency calculation unit 122 sets the post-levitation frequency fsw0 as the switching frequency φ122 when the rotation speed N indicated by the rotation speed information φ2 is within the levitation rotation speed range N3. Since the post-levitation frequency fsw0 is also a constant value not depending on the rotation speed, the switching frequency φ122 is always a constant value (post-levitation frequency fsw0) when the rotation speed N is within the levitation rotation speed range N3.

The switching frequency associated with one rotation speed N is not limited to one. For example, it is possible to associate two switching frequencies with one rotation speed N. For example, the switching frequency fswa and the switching frequency fsw0 may be associated with the rotation speed Nc. When transitioning from the non-levitation state to the levitation state, the switching frequency fsw0 is used for the rotation speed Nc. When transitioning from the levitation state to the non-levitation state, the switching frequency fswa is used for the rotation speed Nc.

In the rotation speed-frequency map M1 shown in FIG. 2, for example, when the rotation speed is rotation speed N1a which is within the non-levitation rotation speed range N1, the switching frequency calculation unit 122 selects the switching frequency fsw(N1a) corresponding to the rotation speed N1a. The PWM control signal calculation unit 123 generates the PWM control signal φ123 based on the switching frequency fsw(N1a) and outputs the PWM control signal φ123 to the inverter 11.

The inverter 11, which has received the PWM control signal φ123, outputs the phase voltage shown in FIG. 4A. The frequency of the output voltage pulse P1 is based on the switching frequency fsw(N1a). The fundamental wave W1 of the output voltage of the inverter 11 is based on the rotation speed N1a.

In the rotation speed-frequency map M1 shown in FIG. 2, for example, when the rotation speed is rotation speed N3a which is within the levitation rotation speed range N3, the inverter 11 outputs the phase voltage shown in FIG. 4B. The period of the output voltage pulse P2 is based on the switching frequency fsw(N2a). The fundamental wave W2 of the output voltage of the inverter 11 is based on the rotation speed N2a.

The switching frequency fsw(N3a) is higher than the switching frequency fsw(N1a). Therefore, the frequency of the output voltage pulse P2 in the levitation state is also higher than the frequency of the output voltage pulse P1 in the non-levitation state.

The rotation speed N3a within the levitation rotation speed range N3 is higher than a certain rotation speed N1a within the non-levitation rotation speed range N1. Therefore, the frequency of the fundamental wave W2 of the output voltage of the inverter in the levitation state is also higher than the frequency of the fundamental wave W1 of the output voltage of the inverter in the non-levitation state.

Hereinafter, the functions and effects of the motor drive device 1 described above will be explained. Specifically, the reason why the switching frequency calculation unit 122 sets the switching frequency φ122 according to the state of the air bearing 24 will be explained. Furthermore, the reason why the deterioration of the air bearing 24 is suppressed by setting such a switching frequency φ122 will be explained.

In the case of the levitation support state S2 shown in FIG. 3C, an air layer 243 is formed between the rotation shaft 23 and the bearing ring 241. As a result, the distance from the outer peripheral surface 231 of the rotation shaft 23 to the inner peripheral surface 242 of the bearing ring 241 is sufficiently electrically separated (insulated, isolated). The rotation shaft 23 and the bearing ring 241 form a parasitic capacitance to ground. Being sufficiently electrically separated means that the parasitic capacitance to ground is sufficiently small.

On the other hand, in the case of the touchdown state S1 (non-levitation support state) shown in FIG. 3D, the rotation shaft 23 contacts the bearing ring 241. The air layer 243 is not formed. The rotation shaft 23 contacts the inner peripheral surface 242 of the bearing ring 241 through a surface coating layer formed on the inner peripheral surface 242. As a result, the distance from the outer peripheral surface 231 of the rotation shaft 23 to the inner peripheral surface 242 of the bearing ring 241 is not sufficiently electrically separated. The parasitic capacitance to ground in the touchdown state S1 is larger than the parasitic capacitance to ground in the levitation support state S2.

When the motor 2 is driven by the switching of the inverter 11, a shaft voltage is induced. As a result, shaft current C is generated according to the impedance to ground. The shaft current C flows through the parasitic circuit including the parasitic capacitance to ground formed by the rotation shaft 23 and the bearing ring 241. The shaft current C in the touchdown state S1, where the parasitic capacitance to ground is large, is larger than the shaft current C in the levitation support state S2, where the parasitic capacitance to ground is small. Excessive shaft current C may damage the air bearing 24. Excessive shaft current C may also deteriorate the air bearing 24.

As a result of intensive research by the inventors, it was conceived that in the touchdown state S1, the frequency of occurrence of shaft current C should be reduced to alleviate the stress on the air bearing 24. The frequency of occurrence of shaft current C depends on the switching frequency φ122. The switching frequency φ122 in the touchdown state S1, where excessive shaft current C is likely to occur, is set lower than the switching frequency φ122 in the normal operation state (levitation support state S2). As a result, the frequency of occurrence of shaft current C in the touchdown state S1 is reduced. Consequently, the deterioration of the air bearing 24 forming the motor 2 can be suppressed.

The motor drive device 1 includes an inverter 11 electrically connected to a motor 2 having an air bearing 24, and an inverter control unit 12 that provides a PWM control signal φ123 according to a pulse control method to control the operation of the inverter 11. The inverter control unit 12 outputs the PWM control signal φ123 including a carrier wave of a first frequency to the inverter 11 when the air bearing 24 is in the touchdown state S1 (not in the levitation support state S2). The inverter control unit 12 outputs the PWM control signal φ123 including a carrier wave of a second frequency to the inverter 11 when the air bearing 24 is in the levitation support state S2. The first frequency is lower than the second frequency. The first frequency and the second frequency may be predetermined constant values. The first frequency and the second frequency may be a set of multiple discrete frequencies. The first frequency and the second frequency may be in continuous frequency bands. The first frequency and the second frequency may be a combination of one or more continuous frequency bands and one or more sets of discrete values.

The motor drive device 1 sets the frequency of the carrier wave forming the PWM control signal φ123 provided to the inverter 11 when the air bearing 24 is in the touchdown state S1 to be lower than the frequency of the carrier wave forming the PWM control signal φ123 provided to the inverter 11 when the air bearing 24 is in the levitation support state S2. As a result, the frequency of occurrence of shaft current C between the air bearing 24 and the rotation shaft 23 is reduced, so the deterioration of the air bearing 24 due to shaft current C can be suppressed. Therefore, the reliability and lifespan of the motor 2 employing the air bearing 24 can be improved.

The inverter control unit 12 of the motor drive device 1 includes a modulation rate calculation unit 121 that sets the modulation rate φ121 of the PWM control signal φ123, a switching frequency calculation unit 122 that sets the frequency of the carrier wave, and a PWM control signal calculation unit 123 that obtains the PWM control signal φ123 using the modulation rate φ121 set by the modulation rate calculation unit 121 and the frequency of the carrier wave set by the switching frequency calculation unit 122. The inverter control unit 12 can provide the inverter 11 with a PWM control signal φ123 that can suppress the deterioration of components due to shaft current C.

The switching frequency calculation unit 122 of the motor drive device 1 sets the frequency of the carrier wave to either the first frequency or the second frequency using information on the rotation speed N of the rotation shaft 23 of the motor 2 supported by the air bearing 24. Whether the air bearing 24 is in the levitation support state S2 or not is related to the rotation speed N. Therefore, the switching frequency calculation unit 122 can set the frequency of the carrier wave that can suppress the deterioration of the air bearing 24 due to shaft current C using the rotation speed N of the rotation shaft 23.

The switching frequency calculation unit 122 sets the frequency of the carrier wave to the first frequency when the rotation speed N is within the non-levitation rotation speed range N1, which is less than the predetermined levitation rotation speed Nr. The switching frequency calculation unit 122 sets the frequency of the carrier wave to the first frequency when the rotation speed N is within the margin rotation speed range N2, which is less than the margin rotation speed Nc which is greater than or equal to the levitation rotation speed Nr and greater than or equal to the levitation rotation speed Nr. The switching frequency calculation unit 122 sets the frequency of the carrier wave to the second frequency when the rotation speed N is within the levitation rotation speed range N3, which is greater than or equal to the margin rotation speed Nc. The switching frequency calculation unit 122 can set the frequency of the carrier wave that can suppress the deterioration of the air bearing 24 due to shaft current C even during the transition from the touchdown state S1 to the levitation support state S2.

The switching frequency calculation unit 122 sets the first frequency to a pre-levitation frequency fswa not depending on the rotation speed N when the rotation speed N is within the non-levitation rotation speed range N1 and the margin rotation speed range N2. The switching frequency calculation unit 122 sets the second frequency to a post-levitation frequency fsw0, which is greater than the pre-levitation frequency fswa, not depending on the rotation speed N when the rotation speed N is within the levitation rotation speed range N3. The switching frequency calculation unit 122 can readily set the frequency of the carrier wave.

<Modified examples>

The electric machine operating apparatus of the present disclosure is not limited to the above-described embodiment. For example, the operation of setting the switching frequency φ122 performed by the switching frequency calculation unit 122 is not limited to the operation shown in FIG. 2. Hereinafter, the first to sixth modified examples of the switching frequency calculation unit 122 will be described.

<First modified example>

FIG. 5A is a rotation speed-frequency map M2 for explaining the first modified example of the operation of the switching frequency calculation unit 122. As shown in FIG. 5A, the frequency set when the rotation speed N is within the non-levitation rotation speed range N1 and the margin rotation speed range N2 is a constant value (pre-levitation frequency fswa) as in the embodiment. On the other hand, the frequency set when the rotation speed N is within the levitation rotation speed range N3 is a proportional value that increases up to the levitation maximum frequency fsw1 according to the rotation speed N.

The switching frequency calculation unit 122 of the first modified example sets the first frequency to the pre-levitation frequency fswa not depending on the rotation speed N when the rotation speed N is within the non-levitation rotation speed range N1 and the margin rotation speed range N2. The switching frequency calculation unit 122 of the first modified example sets the second frequency to a value that increases up to the levitation maximum frequency fsw1 according to the increase of the rotation speed N, using the pre-levitation frequency fswa as a starting value, when the rotation speed N is within the levitation rotation speed range N3. The switching frequency calculation unit 122 can set the frequency of the carrier wave according to the rotation speed N when the fluid bearing 24 is in the levitation support state S2.

<Second modified example>

FIG. 5B is a rotation speed-frequency map M3 for explaining the second modified example of the operation of the switching frequency calculation unit 122. As shown in FIG. 5B, the frequency set when the rotation speed N is within the non-levitation rotation speed range N1 and the margin rotation speed range N2 is a constant value (pre-levitation frequency fswa) as in the embodiment. On the other hand, the frequency set when the rotation speed N is within the levitation rotation speed range N3 is a proportional value that increases up to the levitation maximum frequency fsw1 according to the rotation speed N. In the first modified example, the initial value of the second frequency was the pre-levitation frequency fswa. In the second modified example, the initial value of the second frequency is the first post-levitation frequency fsw2, which is higher than the pre-levitation frequency fswa.

The switching frequency calculation unit 122 of the second modified example sets the first frequency to a constant value not depending on the rotation speed N when the rotation speed N is within the non-levitation rotation speed range N1 and the margin rotation speed range N2. The switching frequency calculation unit 122 sets the second frequency to a value that increases up to the levitation maximum frequency fsw1 according to the increase of the rotation speed N, using the first post-levitation frequency fsw2, which is higher than the pre-levitation frequency fswa, as a starting value, when the rotation speed N is within the levitation rotation speed range N3. The switching frequency calculation unit 122 can set the frequency of the carrier wave according to the rotation speed N when the fluid bearing 24 is in the levitation support state S2.

<Third modified example>

FIG. 6A is a rotation speed-frequency map M4 for explaining the third modified example of the operation of the switching frequency calculation unit 122. As shown in FIG. 6A, the frequency set when the rotation speed N is within the non-levitation rotation speed range N1 and the margin rotation speed range N2 is a constant value (pre-levitation frequency fswa) as in the embodiment. On the other hand, the switching frequency calculation unit 122 sets several levitation rotation speed ranges, which are the first levitation rotation speed range N31, the second levitation rotation speed range N32, and the third levitation rotation speed range N33, within the levitation rotation speed range N3. The switching frequency calculation unit 122 sets the frequency values to increase stepwise for each rotation speed range. In the example shown in FIG. 6A, the switching frequency calculation unit 122 sets the first frequency to the first post-levitation frequency fsw2 when the rotation speed N is within the first levitation rotation speed range N31. The switching frequency calculation unit 122 sets the first frequency to the second post-levitation frequency fsw2a when the rotation speed N is within the second levitation rotation speed range N32. The switching frequency calculation unit 122 sets the first frequency to the levitation maximum frequency fsw1 when the rotation speed N is within the third levitation rotation speed range N33.

The switching frequency calculation unit 122 of the third modified example sets the first frequency to a constant value not depending on the rotation speed when the rotation speed N is within the non-levitation rotation speed range N1 and the margin rotation speed range N2. The switching frequency calculation unit 122 sets at least the first levitation rotation speed range N31, the second levitation rotation speed range N32, and the third levitation rotation speed range N33 where the rotation speed N is within the levitation rotation speed range N3. The switching frequency calculation unit 122 sets the second frequency to the first post-levitation frequency fsw2, which does not depend on the rotation speed, when the rotation speed N is within the first levitation rotation speed range N31. The switching frequency calculation unit 122 sets the second frequency to the second post-levitation frequency fsw2a, which does not depend on the rotation speed, when the rotation speed N is within the second levitation rotation speed range N32. The switching frequency calculation unit 122 sets the second frequency to the levitation maximum frequency fsw1, which does not depend on the rotation speed, when the rotation speed N is within the third levitation rotation speed range N33. The switching frequency calculation unit 122 can readily set the frequency of the carrier wave when the fluid bearing 24 is in the levitation support state S2.

<Fourth modified example>

FIG. 6B is a rotation speed-frequency map M5 for explaining the fourth modified example of the operation of the switching frequency calculation unit 122. As shown in FIG. 6B, the frequency set when the rotation speed N is within the non-levitation rotation speed range N1 and the margin rotation speed range N2 is a constant value (pre-levitation frequency fswa) as in the embodiment. When the rotation speed N is within the levitation rotation speed range N3 and within the first levitation rotation speed range N31, the switching frequency calculation unit 122 sets the second frequency to the first post-levitation frequency fsw2, which is a constant value. When the rotation speed N is within the levitation rotation speed range N3 and within the second levitation rotation speed range N32, the switching frequency calculation unit 122 sets the second frequency to a value that increases up to the levitation maximum frequency fsw1 according to the increase of the rotation speed N.

The switching frequency calculation unit 122 of the fourth modified example sets the first frequency to a constant value not depending on the rotation speed when the rotation speed N is within the non-levitation rotation speed range N1 and the margin rotation speed range N2. The switching frequency calculation unit 122 sets at least the first levitation rotation speed range N31 and the second levitation rotation speed range N32 where the rotation speed N is within the levitation rotation speed range N3. The switching frequency calculation unit 122 sets the second frequency to the first post-levitation frequency fsw2, which is higher than the first frequency and does not depend on the rotation speed, when the rotation speed N is within the first levitation rotation speed range N31. The switching frequency calculation unit 122 sets the second frequency to a value that increases up to the levitation maximum frequency fsw1 according to the increase of the rotation speed N, using the first post-levitation frequency fsw2 as a starting value, when the rotation speed N is within the second levitation rotation speed range N32. The switching frequency calculation unit 122 can set the frequency of the carrier wave according to the rotation speed when the fluid bearing 24 is in the levitation support state S2.

<Fifth modified example>

FIG. 7 is a rotation speed-frequency map M6 for explaining the fifth modified example of the operation of the switching frequency calculation unit 122. As shown in FIG. 7, when the rotation speed N is within the non-levitation rotation speed range N1 and the margin rotation speed range N2, the switching frequency calculation unit 122 sets the first frequency to a value that increases from the pre-levitation frequency fswc to the pre-levitation frequency fswb according to the increase of the rotation speed N. When the rotation speed N is within the levitation rotation speed range N3, the switching frequency calculation unit 122 sets the second frequency to a value that increases from the pre-levitation frequency fswb to the levitation maximum frequency fsw1 according to the increase of the rotation speed N.

The switching frequency calculation unit 122 of the fifth modified example sets the first frequency to a value that increases according to the increase of the rotation speed N when the rotation speed N is within the non-levitation rotation speed range N1 and the margin rotation speed range N2. The switching frequency calculation unit 122 sets the second frequency to a value that increases up to the levitation maximum frequency fsw1 according to the increase of the rotation speed N, using the pre-levitation frequency fswb as a starting value, when the rotation speed N is within the levitation rotation speed range N3. The switching frequency calculation unit 122 can set the frequency of the carrier wave according to the rotation speed when the air bearing 24 is not in the levitation support state S2. The switching frequency calculation unit 122 can also set the frequency of the carrier wave according to the rotation speed N when the air bearing 24 is in the levitation support state S2.

<Sixth modified example>

The pre-levitation frequency fswa and the post-levitation frequency fsw0 can also be defined from a different perspective. The first condition defined from the different perspective includes the levitation ratio R1 (fsw1 / Nm). The levitation ratio R1 (fsw1 / Nm) is a ratio between the levitation maximum frequency fsw1 of the carrier wave when the fluid bearing 24 is in the levitation support state S2 and the levitation maximum rotation speed Nm (upper limit levitation rotation speed) corresponding to the levitation maximum frequency fsw1. The levitation ratio R1 (fsw1 / Nm) corresponds to the graph G7a of the rotation speed-frequency map M7 shown in FIG. 8. The first condition also includes the non-levitation ratio R2 ((fswb - fswc) / Nr). The non-levitation ratio R2 ((fswb - fswc) / Nr) is a ratio between the difference (fswb - fswc) and the predetermined levitation rotation speed Nr. The difference (fswb - fswc) is a difference between the non-levitation maximum frequency fswb of the carrier wave when the fluid bearing 24 is not in the levitation support state S2 and the non-levitation minimum frequency fswc of the carrier wave when the fluid bearing 24 is not in the levitation support state S2. The non-levitation ratio R2 corresponds to the graph G7b shown in FIG. 8. The levitation ratio R1 (fsw1 / Nm) is greater than the non- levitation ratio R2 ((fswb - fswc) / Nr).

The first condition may also be defined using the non-levitation ratio R2A ((fswb - fswc) / Nc). The non-levitation ratio R2A ((fswb - fswc) / Nc) is a ratio between the difference (fswb - fswc) and the lower limit levitation rotation speed Nc. The difference (fswb - fswc) is a difference between the non-levitation maximum frequency fswb and the non-levitation minimum frequency fswc of the carrier wave when the fluid bearing 24 is not in the levitation support state S2. The lower limit levitation rotation speed Nc may be used for the definition of the first condition. The levitation ratio R1 (fsw1 / Nm) is greater than the non- levitation ratio R2A ((fswb - fswc) / Nc).

The operation of the inverter control unit 12 of the sixth modified example can also set the frequency of the carrier wave that can suppress the deterioration of components due to shaft current C.

<Seventh modified example>

Another modification from a different perspective will be described. In the above-described embodiment, the state of the rotation shaft 23 supported by the air bearing 24 was determined to be either the non-levitation rotation speed range N1 or the margin rotation speed range N2, or the levitation rotation speed range N3 using the rotation speed information φ2, and the switching frequency φ122 was set according to either state.

The motor drive device 1A of the seventh modified example shown in FIG. 9 determines the state of the rotation shaft 23 supported by the air bearing 24 using information other than the rotation speed information φ2. For example, the inverter control unit 12A of the motor drive device 1A includes an air bearing levitation signal acquisition unit 124 (signal acquisition unit) that receives a levitation detection signal φ3 indicating that the rotation shaft 23 is levitating.

The air bearing levitation signal acquisition unit 124 may receive the levitation detection signal φ3 from a levitation detection sensor 25 provided in the motor 2. The air bearing levitation signal acquisition unit 124 may receive the levitation detection signal φ3 from the inverter 11 as the sensor detection value φ11. When the air bearing levitation signal acquisition unit 124 receives the levitation detection signal φ3, it provides a signal φ124 indicating that the rotation speed range is the levitation rotation speed range N3 to the switching frequency calculation unit 122. When the air bearing levitation signal acquisition unit 124 does not receive the levitation detection signal φ3, it provides a signal φ124 indicating that the rotation speed range is the non-levitation rotation speed range N1 or the margin rotation speed range N2 to the switching frequency calculation unit 122. The switching frequency calculation unit 122 sets the switching frequency φ122 to either the pre-levitation frequency fswa or the post-levitation frequency fsw0 according to the graph shown in FIG. 2.

The switching frequency calculation unit 122 of the modified example may additionally receive the rotation speed information φ2. When the rotation speed information φ2 is received, the second frequency can be set to a value that increases according to the rotation speed N according to the graphs shown in FIGS. 2 and 5 to 7.

The inverter control unit 12A of the motor drive device 1A includes an air bearing levitation signal acquisition unit 124 that receives a signal indicating whether the rotation shaft 23 of the motor 2 supported by the air bearing 24 is levitating. The switching frequency calculation unit 122 sets the frequency of the carrier wave using the signal acquired by the air bearing levitation signal acquisition unit 124. The inverter control unit 12 can set the frequency of the carrier wave that can suppress the deterioration of components due to shaft current C without using the rotation speed.

<Eighth modified example>

The relationship between the rotation speed N and the switching frequency fsw of the carrier wave can be defined by Equation (1). Equation (1) is defined using the average of the switching frequency fsw with respect to the rotation speed N.

The left side of Equation (1) is the average of the switching frequency fsw with respect to the rotation speed N when in the levitation state. The right side of Equation (1) is the average of the switching frequency fsw with respect to the rotation speed N when in the non-levitation state. For example, the average of the switching frequency fsw with respect to the rotation speed when in the non-levitation state is the value obtained by dividing the area of the region Q1 enclosed by the X-axis, the Y-axis, the line indicating the rotation speed Nr, and the line L1 indicating the relationship between the rotation speed N and the switching frequency fsw, by the bandwidth (Nr - Ns) of the non-levitation rotation speed range N1, as shown in FIG. 10.

Similarly, the average of the switching frequency fsw with respect to the rotation speed when in the levitation state is the value obtained by dividing the area of the region Q2 by the bandwidth (Nm - Nc) of the levitation rotation speed range N3. The relationship between the rotation speed N and the switching frequency fsw of the carrier wave may be defined such that the average of the switching frequency fsw with respect to the rotation speed when in the non-levitation state is smaller than the average of the switching frequency fsw with respect to the rotation speed when in the levitation state.

[Equation 2]

$$\frac{\int_{N_c}^{N_m} f_2(N)dN}{N_m - N_c} > \frac{\int_{N_s}^{N_r} f_1(N)dN}{N_r - N_s} \cdots (1)$$

Nr: an upper limit non-levitation rotation speed indicating an upper limit of the rotation speed N of the rotation shaft 23 when the air bearing 24 is not in the levitation support state.

Ns: a lower limit non-levitation rotation speed indicating a lower limit of the rotation speed N of the rotation shaft 23 when the air bearing 24 is not in the levitation support state.

$f_1(N)$: a function indicating a relationship between the rotation speed N of the rotation shaft 23 when the air bearing 24 is not in the levitation support state and the frequency of the carrier wave corresponding to the rotation speed N of the rotation shaft 23, with the rotation speed N of the rotation shaft 23 as an independent variable and the frequency of the carrier wave as a dependent variable.

Nm: an upper limit levitation rotation speed indicating an upper limit of the rotation speed N of the rotation shaft 23 when the air bearing 24 is in the levitation support state.

Nc: a lower limit levitation rotation speed indicating a lower limit of the rotation speed N of the rotation shaft 23 when the air bearing 24 is in the levitation support state.

$f_2(N)$: a function indicating a relationship between the rotation speed N of the rotation shaft 23 when the air bearing 24 is in the levitation support state and the frequency of the carrier wave corresponding to the rotation speed N of the rotation shaft 23, with the rotation speed N of the rotation shaft 23 as an independent variable and the frequency of the carrier wave as a dependent variable.

<Ninth modified example>

When starting the motor 2 from a stopped state, the output voltage pulse P is supplied to the motor 2 from the inverter 11 under the control of the motor drive device 1. The motor 2, which has received the output voltage pulse P, gradually increases the rotation speed of the rotation shaft 23. At this time, the rotation shaft 23 starts rotating from the touchdown state S1, where it contacts the air bearing 24. Next, as the rotation speed of the rotation shaft 23 increases, it transitions from the touchdown state S1 to the levitation support state S2. The rotation shaft 23 increases its rotation speed to the rotation speed defined as the rated operational state.

The relationship between the elapsed time from the start of the motor 2 to the rated operation and the frequency fsw of the output voltage pulse P may be defined by Equation (2). Equation (2) is defined using the average of the frequency fsw of the output voltage pulse P with respect to the time T.

[Equation 3]

$$\frac{\int_{T_c}^{T_m} f_2(T)dT}{T_m - T_c} > \frac{\int_{T_s}^{T_r} f_1(T)dT}{T_r - T_s} \cdots (2)$$

Tr: an upper limit non-levitation time indicating an upper limit of the time T of the rotation shaft 23 when the air bearing 24 is not in the levitation support state.

Ts: a lower limit non-levitation time indicating a lower limit of the time T of the rotation shaft 23 when the air bearing 24 is not in the levitation support state.

$f_1(T)$: a function indicating a relationship between the time T of the rotation shaft 23 when the air bearing 24 is not in the levitation support state and the frequency of the carrier wave corresponding to the time T of the rotation shaft 23, with the time T of the rotation shaft 23 as an independent variable and the frequency of the carrier wave as a dependent variable.

Tm: an upper limit levitation time indicating an upper limit of the time T of the rotation shaft 23 when the air bearing 24 is in the levitation support state.

Tc: a lower limit levitation time indicating a lower limit of the time T of the rotation shaft 23 when the air bearing 24 is in the levitation support state.

$f_2(T)$: a function indicating a relationship between the time T of the rotation shaft 23 when the air bearing 24 is in the levitation support state and the frequency of the carrier wave corresponding to the time T of the rotation shaft 23, with the time T of the rotation shaft 23 as an independent variable and the frequency of the carrier wave as a dependent variable.

The left side of Equation (2) is the average of the switching frequency fsw with respect to the time T when in the levitation state. The right side of Equation (2) is the average of the switching frequency fsw with respect to the time T when in the non-levitation state. For example, the average of the switching frequency fsw with respect to the time T when in the non-levitation state is the time average value obtained by dividing the area of the region K1 enclosed by the X-axis, the Y-axis, the line indicating the time Tr, and the line L2 indicating the relationship between the time T and the switching frequency fsw, by the reference time (Tr - Ts) of the non-levitation time range T1, as shown in FIG. 11. The area of the region K1 is the value obtained by time-integrating the frequency of the first output voltage pulse.

The average of the switching frequency fsw with respect to the time T when in the levitation state is the value obtained by dividing the area of the region K2 by the reference time (Tm - Tc) of the levitation time range T3. The area of the region K2 is the time average value obtained by time-integrating the frequency of the second output voltage pulse. The relationship between the time T and the switching frequency fsw of the carrier wave can be defined such that the average of the switching frequency fsw with respect to the time when in the non-levitation state is smaller than the average of the switching frequency fsw with respect to the time T when in the levitation state (see Equation (2)).

<Other Modified examples>

The present disclosure is not limited to the above-described examples, and various modifications are possible. For example, in the above-described embodiment, the switching frequency in the non-levitation rotation speed range N1 was always disclosed as not exceeding the minimum value of the switching frequency in the levitation rotation speed range N3. However, this frequency condition is not essential. For example, it does not exclude the possibility that the switching frequency temporarily exceeds the minimum value of the switching frequency in the levitation rotation speed range N3 when in the non-levitation rotation speed range N1.

## Reference Signs List

1, 1A: Motor drive device (electric machine operating apparatus)
2: Motor (electric machine)
3: DC power source
11: Inverter (power conversion unit)
12, 12A: Inverter control unit (control unit)
21: Rotor
22: Stator
23: Rotation shaft
24: Air bearing
25: Levitation detection sensor
121: Modulation rate calculation unit (first calculation unit)
122: Switching frequency calculation unit (second calculation unit)
123: PWM control signal calculation unit (third calculation unit)
124: Air bearing levitation signal acquisition unit
S1: Touchdown state
S2: Levitation support state
N: Rotation speed
N1: Non-levitation rotation speed range
N2: Margin rotation speed range
N3: Levitation rotation speed range
Ns: Lower limit non-levitation rotation speed
Nr: Levitation rotation speed (upper limit non-levitation rotation speed)
Nm: Levitation maximum rotation speed (upper limit levitation rotation speed)
Nc: Margin rotation speed (lower limit levitation rotation speed)

## Claims

**1.** An electric machine operating apparatus comprising:

a power conversion unit electrically connected to an electric machine having a fluid bearing and configured to operate according to a pulse control method; and
a control unit configured to provide a control signal to the power conversion unit to control an operation of the power conversion unit,
wherein the control unit outputs the control signal including a carrier wave of a first frequency to the power conversion unit when the fluid bearing is not in a levitation support state,
wherein the control unit outputs the control signal including a carrier wave of a second frequency to the power conversion unit when the fluid bearing is in the levitation support state, and
wherein the first frequency is lower than the second frequency.

**2.** The electric machine operating apparatus according to claim 1, wherein the control unit comprises:

a first calculation unit configured to set a modulation rate of the control signal;
a second calculation unit configured to set a frequency of the carrier wave; and
a third calculation unit configured to obtain the control signal using the modulation rate set by the first calculation unit and the frequency of the carrier wave set by the second calculation unit.

**3.** The electric machine operating apparatus according to claim 2,
wherein the second calculation unit sets the frequency of the carrier wave to either the first frequency or the second frequency using information on a rotation speed of a rotation shaft of the electric machine supported by the fluid bearing.

**4.** The electric machine operating apparatus according to claim 3,

wherein the second calculation unit sets the frequency of the carrier wave to the first frequency when the rotation speed is within a non-levitation rotation speed range and a margin rotation speed range, wherein the non-levitation rotation speed range is a range less than a predetermined levitation rotation speed, wherein the margin rotation speed range is a range less than a margin rotation speed and greater than or equal to the levitation rotation speed, wherein the margin rotation speed is greater than or equal to the levitation rotation speed, and
wherein the second calculation unit sets the frequency of the carrier wave to the second frequency when the rotation speed is within a levitation rotation speed range which is greater than or equal to the margin rotation speed.

**5.** The electric machine operating apparatus according to claim 4,

wherein the second calculation unit sets the first frequency to a first constant value not depending on the rotation speed when the rotation speed is within the non-levitation rotation speed range and the margin rotation speed range,
wherein the second calculation unit sets the second frequency to a second constant value not depending on the rotation speed when the rotation speed is within the levitation rotation speed range, and
wherein the first constant value is smaller than the second constant value.

**6.** The electric machine operating apparatus according to claim 4,

wherein the second calculation unit sets the first frequency to a constant value not depending on the rotation speed when the rotation speed is within the non-levitation rotation speed range and the margin rotation speed range, and
wherein the second calculation unit sets the second frequency to a value that increases in accordance with an increase of the rotation speed, using the first frequency as a starting value, when the rotation speed is within the levitation rotation speed range.

**7.** The electric machine operating apparatus according to claim 4,

wherein the second calculation unit sets the first frequency to a constant value not depending on the rotation speed when the rotation speed is within the non-levitation rotation speed range and the margin rotation speed range, and
wherein the second calculation unit sets the second frequency to a value that increases in accordance with an increase of the rotation speed, using a value higher than the first frequency as a starting value, when the rotation speed is within the levitation rotation speed range.

**8.** The electric machine operating apparatus according to claim 4,

wherein the second calculation unit sets the first frequency to a constant value not depending on the rotation speed when the rotation speed is within the non-levitation rotation speed range and the margin rotation speed range, and
wherein the second calculation unit sets at least a first levitation rotation speed range and a second levitation rotation speed range higher than the first levitation rotation speed range where the rotation speed is within the levitation rotation speed range, and
wherein the second calculation unit sets the second frequency to a first constant value not depending on the rotation speed and higher than the first frequency when the rotation speed is within the first levitation rotation speed range, and
wherein the second calculation unit sets the second frequency to a second constant value not depending on the rotation speed and higher than the first constant value when the rotation speed is in the second levitation rotation speed range.

**9.** The electric machine operating apparatus according to claim 4,

wherein the second calculation unit sets the first frequency to a constant value not depending on the rotation speed when the rotation speed is within the non-levitation rotation speed range and the margin rotation speed range, and
wherein the second calculation unit sets at least a first levitation rotation speed range and a second levitation rotation speed range higher than the first levitation rotation speed range where the rotation speed is within the levitation rotation speed range, and
wherein the second calculation unit sets the second frequency to a first constant value not depending on the rotation speed and higher than the first frequency when the rotation speed is within the first levitation rotation speed range, and
wherein the second calculation unit sets the second frequency to a value that increases in accordance with an increase of the rotation speed, using the first constant value as a starting value, when the rotation speed is in the second levitation rotation speed range.

**10.** The electric machine operating apparatus according to claim 4,

wherein the second calculation unit sets the first frequency to a value that increases in accordance with an increase of the rotation speed when the rotation speed is within the non-levitation rotation speed range and the margin rotation speed range, and
wherein the second calculation unit sets the second frequency to a value that increases in accordance with an increase of the rotation speed, using the first frequency as a starting value, when the rotation speed is within the levitation rotation speed range.

**11.** The electric machine operating apparatus according to claim 1,

wherein the control unit sets the frequency of the carrier wave to either the first frequency or the second frequency using information on a rotation speed (N) of a rotation shaft of the electric machine supported by the fluid bearing and a relationship between the rotation speed (N) and the frequency of the carrier wave, and
wherein the control unit obtains information defined by a non-levitation rotation speed range and a levitation rotation speed range, wherein the non-levitation rotation speed range is defined by an upper limit non-levitation rotation speed (Nr) and the levitation rotation speed range is defined by an upper limit levitation rotation speed (Nm),
wherein the relationship between the rotation speed (N) and the frequency of the carrier wave includes:

a non-levitation ratio ((fswb - fswc) / Nr) defined by a difference (fswb - fswc) between a non-levitation maximum frequency (fswb) of the carrier wave when the fluid bearing is not in the levitation support state and a non-levitation minimum frequency (fswc) of the carrier wave when the fluid bearing is not in the levitation support state, and the predetermined upper limit non-levitation rotation speed (Nr); and
a levitation ratio (fsw1 / Nm) defined by a levitation maximum frequency (fsw1) of the carrier wave when the fluid bearing is in the levitation support state and the upper limit levitation rotation speed (Nm) corresponding to the levitation maximum frequency (fsw1), and

wherein the levitation ratio (fsw1 / Nm) is greater than the non-levitation ratio ((fswb - fswc) / Nr).

**12.** The electric machine operating apparatus according to claim 1,

wherein the control unit sets the frequency of the carrier wave to either the first frequency or the second frequency using information on a rotation speed (N) of a rotation shaft of the electric machine supported by the fluid bearing and a relationship between the rotation speed (N) and the frequency of the carrier wave,
wherein the relationship between the rotation speed (N) and the frequency of the carrier wave satisfies a condition represented by the Equation (1), and
[Equation 1]

$$\frac{\int_{N_c}^{N_m} f_2(N)dN}{N_m - N_c} > \frac{\int_{N_s}^{N_r} f_1(N)dN}{N_r - N_s} \cdots (1)$$

wherein the Equation (1) includes:

an upper limit non-levitation rotation speed (Nr) indicating an upper limit of the rotation speed (N) of the rotation shaft when the fluid bearing is not in the levitation support state;
a lower limit non-levitation rotation speed (Ns) indicating a lower limit of the rotation speed (N) of the rotation shaft when the fluid bearing is not in the levitation support state;
a function ($f_1$(N)) indicating a relationship between the rotation speed (N) of the rotation shaft when the fluid bearing is not in the levitation support state and the frequency of the carrier wave corresponding to the rotation speed (N) of the rotation shaft, with the rotation speed (N) of the rotation shaft as an independent variable and the frequency of the carrier wave as a dependent variable;
an upper limit levitation rotation speed (Nm) indicating an upper limit of the rotation speed (N) of the rotation shaft when the fluid bearing is in the levitation support state;
a lower limit levitation rotation speed (Nc) indicating a lower limit of the rotation speed (N) of the rotation shaft when the fluid bearing is in the levitation support state;
a function ($f_2(N)$) indicating a relationship between the rotation speed (N) of the rotation shaft when the fluid bearing is in the levitation support state and the frequency of the carrier wave corresponding to the rotation speed (N) of the rotation shaft, with the rotation speed (N) of the rotation shaft as an independent variable and the frequency of the carrier wave as a dependent variable.

**13.** The electric machine operating apparatus according to claim 2,

wherein the control unit further comprises a signal acquisition unit configured to receive a signal indicating whether a rotation shaft of the electric machine supported by the fluid bearing is levitating or not, and
wherein the second calculation unit sets the frequency of the carrier wave using the signal acquired by the signal acquisition unit.

**14.** An electric machine operating apparatus comprising:

a power conversion unit electrically connected to an electric machine having a fluid bearing and configured to operate according to a pulse control method,
wherein the power conversion unit outputs a first output voltage pulse when the fluid bearing is not in a levitation support state,
wherein the power conversion unit outputs a second output voltage pulse when the fluid bearing is in the levitation support state, and
wherein a frequency of the first output voltage pulse is lower than a frequency of the second output voltage pulse.

**15.** The electric machine operating apparatus according to claim 14,
wherein a time average value obtained by dividing a value obtained by time-integrating the frequency of the second output voltage pulse by a reference time is smaller than a time average value obtained by dividing a value obtained by time-integrating the frequency of the first output voltage pulse by the reference time.

Fig.1

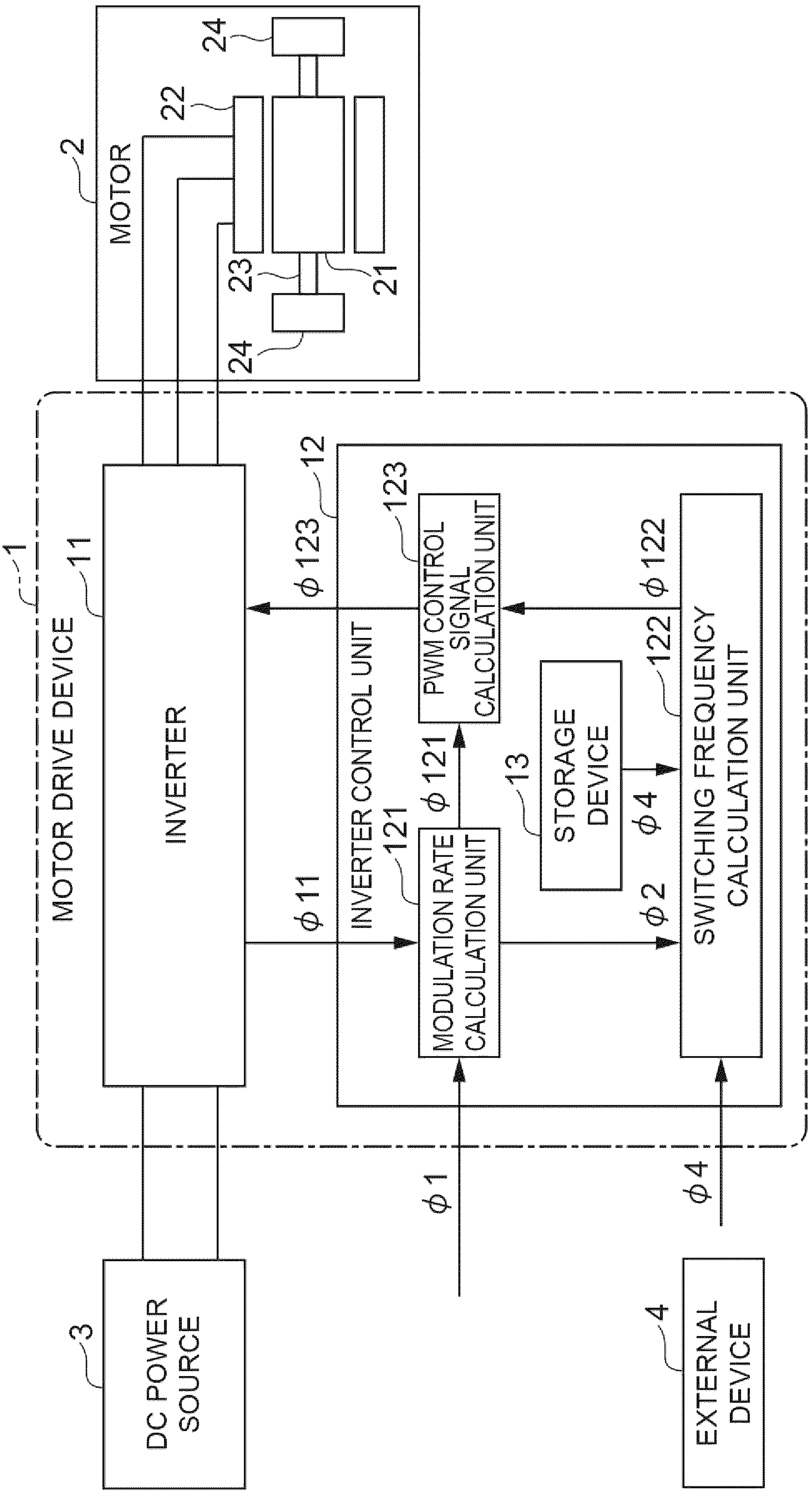
MOTOR
2
22
24
23
21
MOTOR DRIVE DEVICE
1
11
INVERTER
12
INVERTER CONTROL UNIT
φ123
123
PWM CONTROL SIGNAL CALCULATION UNIT
φ122
122
SWITCHING FREQUENCY CALCULATION UNIT
13
STORAGE DEVICE
φ4
φ121
121
MODULATION RATE CALCULATION UNIT
φ11
φ2
φ1
φ4
3
DC POWER SOURCE
4
EXTERNAL DEVICE

Fig.2

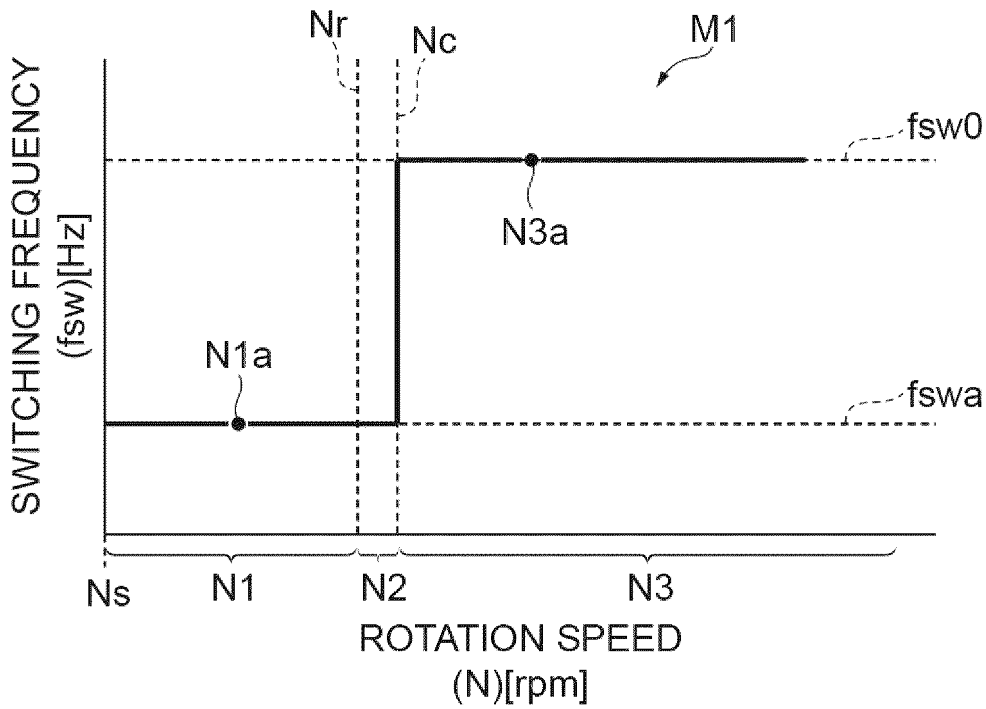
Nr
Nc
M1
fsw0
N3a
N1a
fswa
SWITCHING FREQUENCY
(fsw)[Hz]
Ns
N1
N2
N3
ROTATION SPEED
(N)[rpm]

Fig.3A

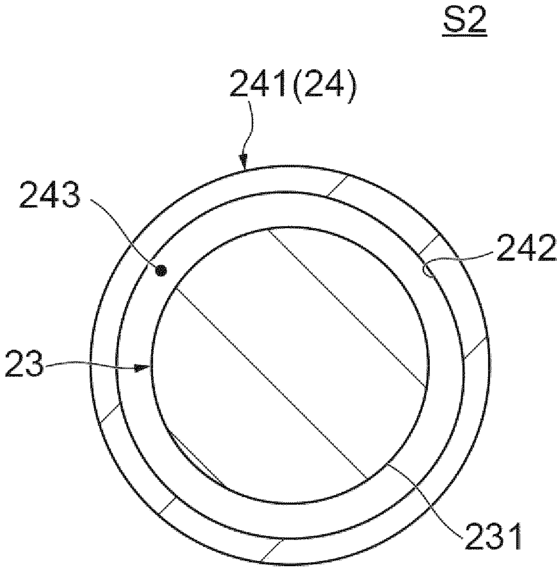


Fig.3B

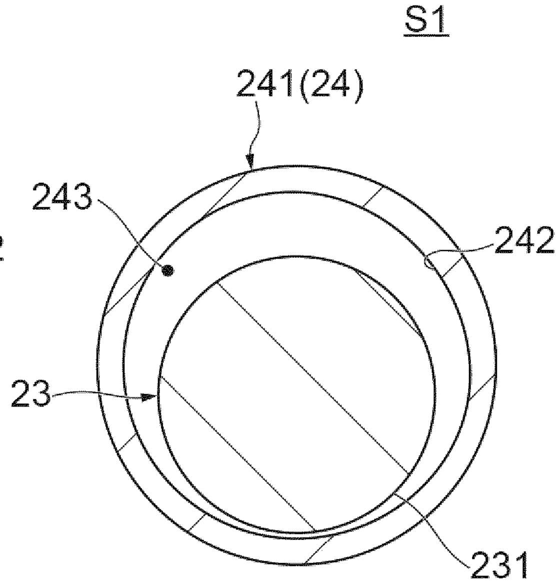


Fig.3C

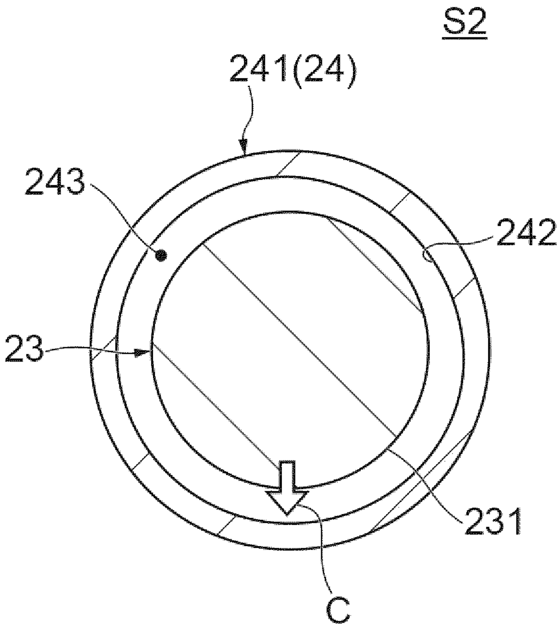


Fig.3D

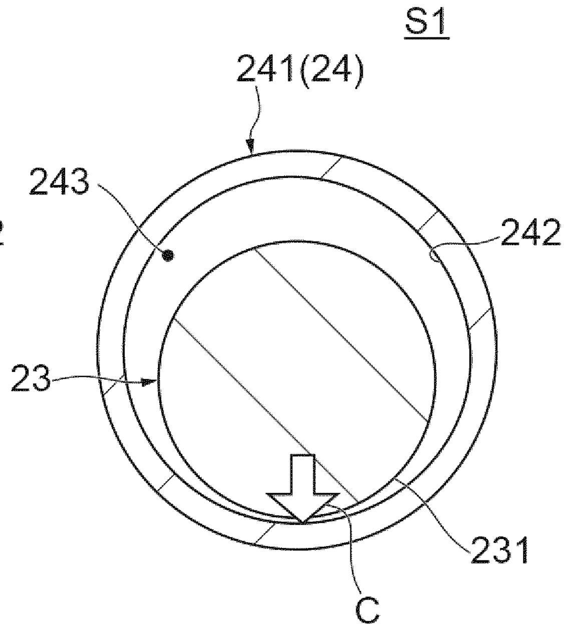

# Fig.4A

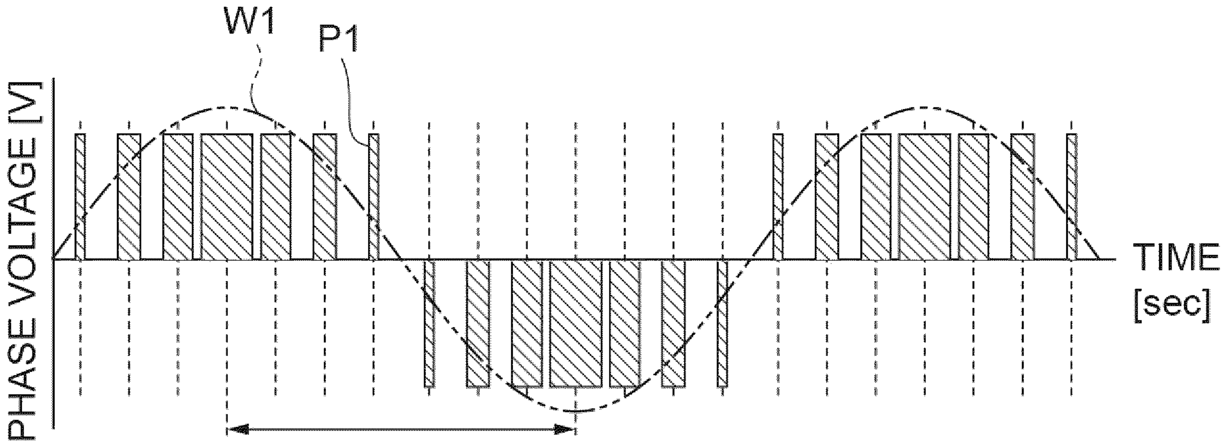


# Fig.4B

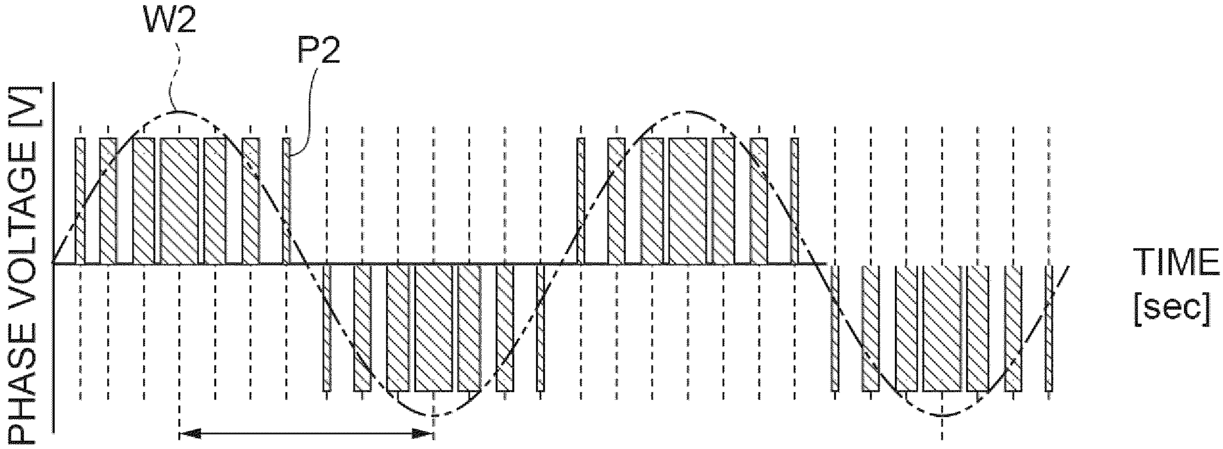

# Fig.5A

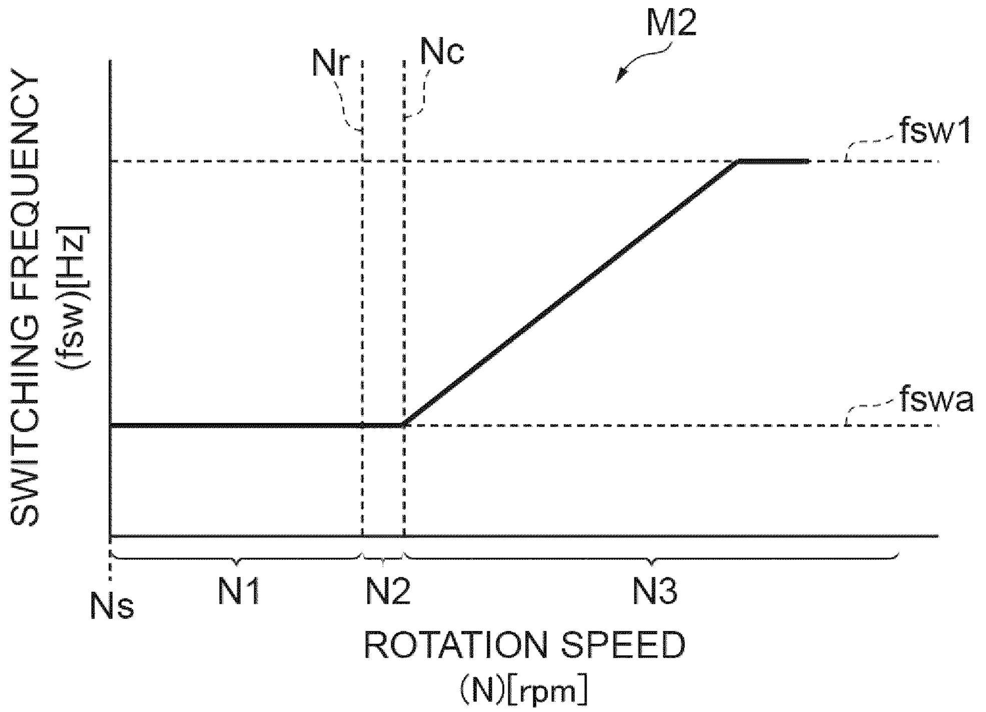
M2
Nr
Nc
fsw1
fswa
SWITCHING FREQUENCY
(fsw)[Hz]
Ns
N1
N2
N3
ROTATION SPEED
(N)[rpm]

# Fig.5B

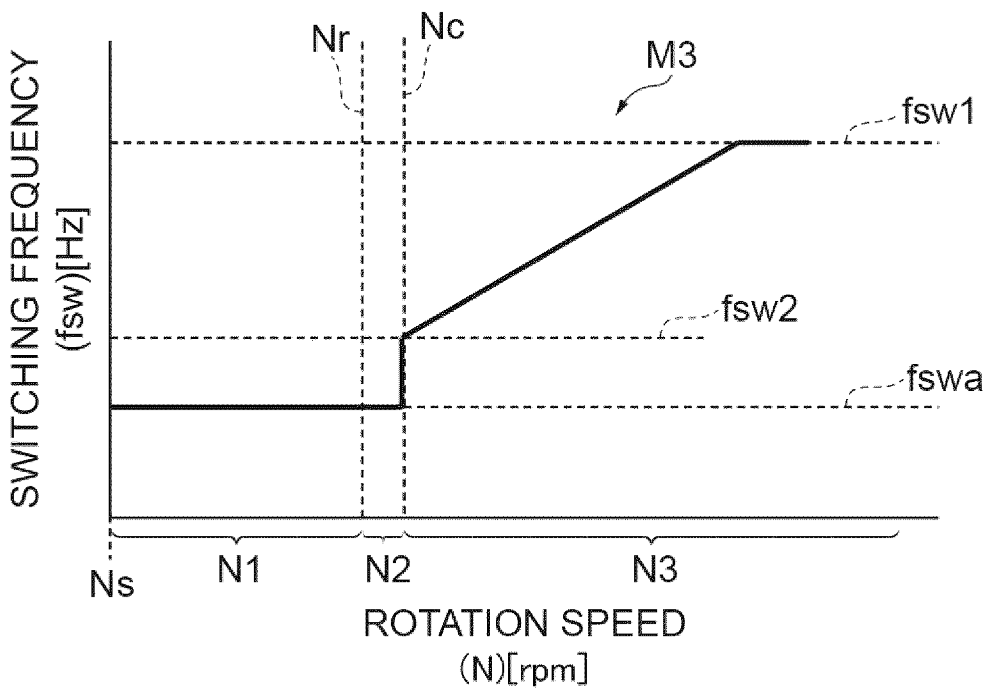
M3
Nr
Nc
fsw1
fsw2
fswa
SWITCHING FREQUENCY
(fsw)[Hz]
Ns
N1
N2
N3
ROTATION SPEED
(N)[rpm]

# Fig.6A

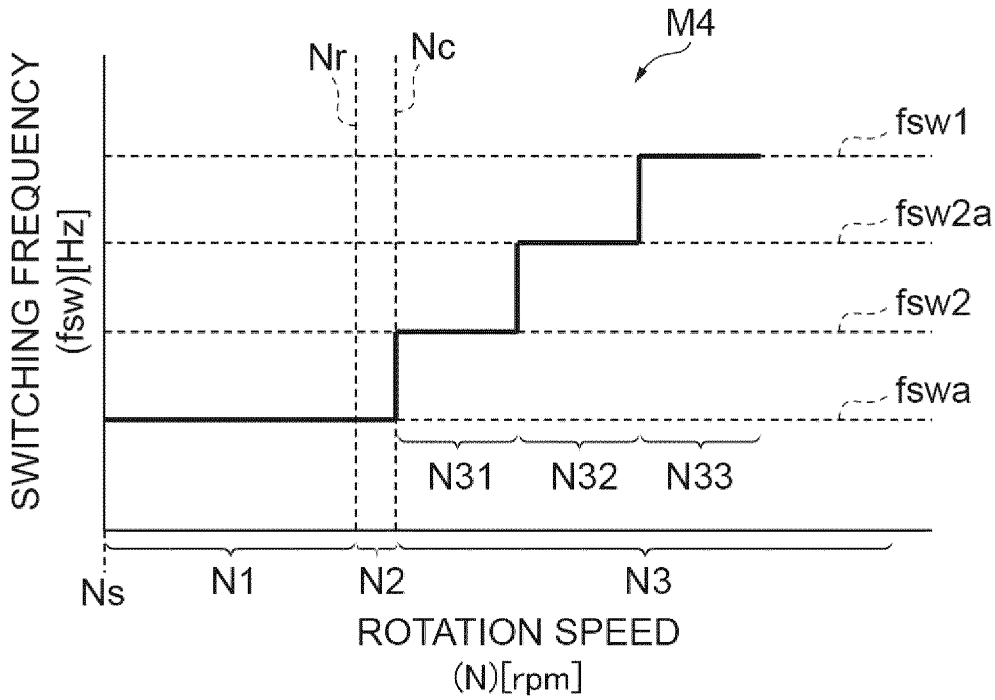
M4
Nr
Nc
fsw1
fsw2a
fsw2
fswa
SWITCHING FREQUENCY
(fsw)[Hz]
N31
N32
N33
Ns
N1
N2
N3
ROTATION SPEED
(N)[rpm]

# Fig.6B

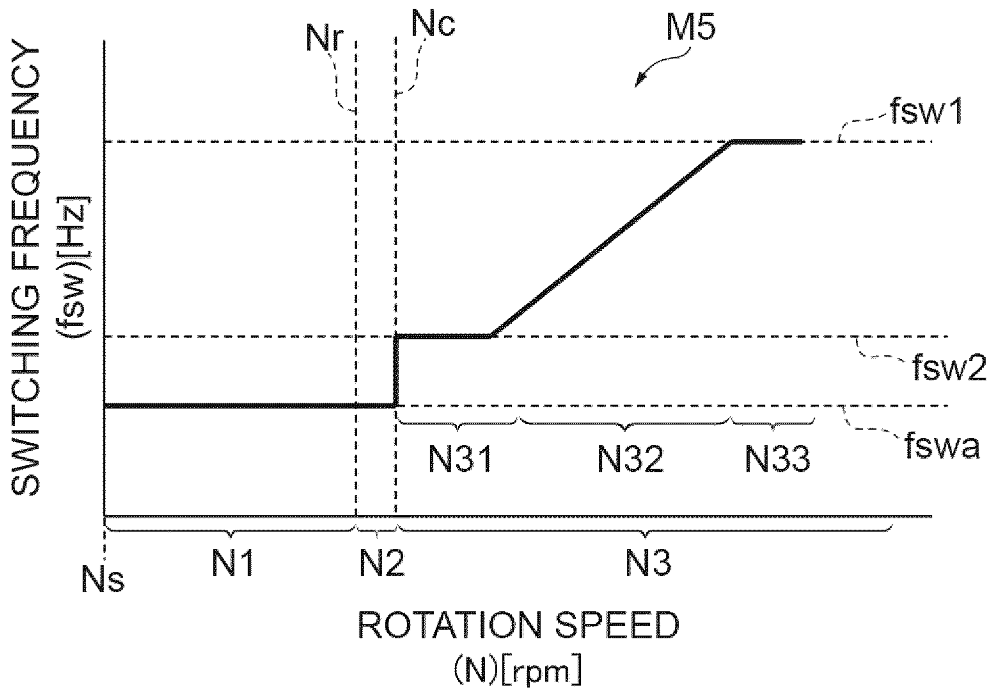
M5
Nr
Nc
fsw1
fsw2
fswa
SWITCHING FREQUENCY
(fsw)[Hz]
N31
N32
N33
Ns
N1
N2
N3
ROTATION SPEED
(N)[rpm]

*Fig.7*

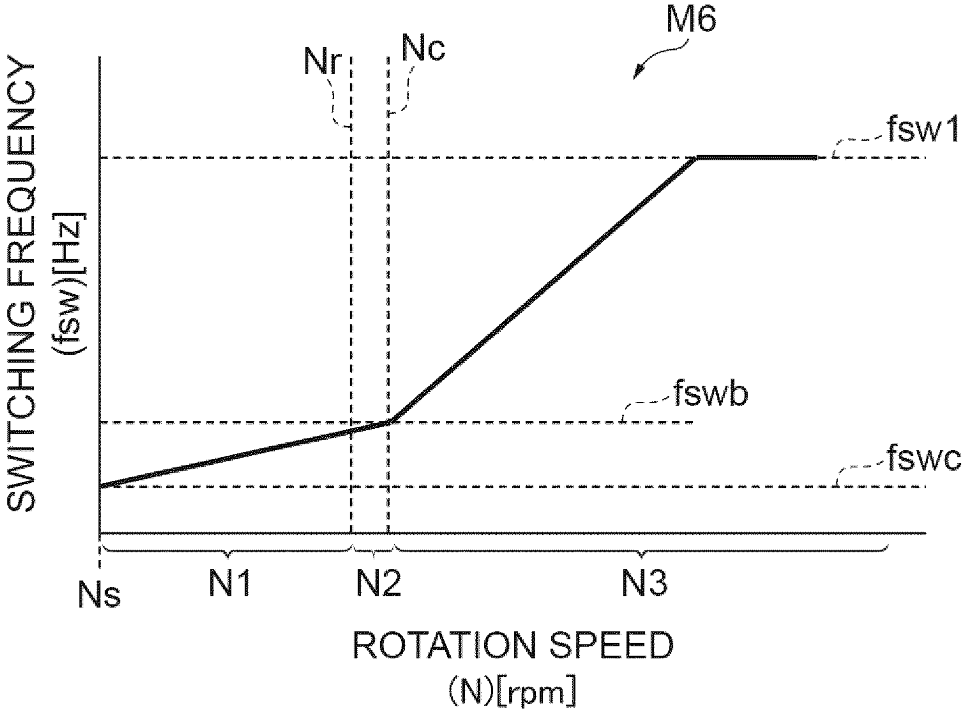
M6
Nr
Nc
SWITCHING FREQUENCY
(fsw)[Hz]
fsw1
fswb
fswc
Ns
N1
N2
N3
ROTATION SPEED
(N)[rpm]

# Fig.8

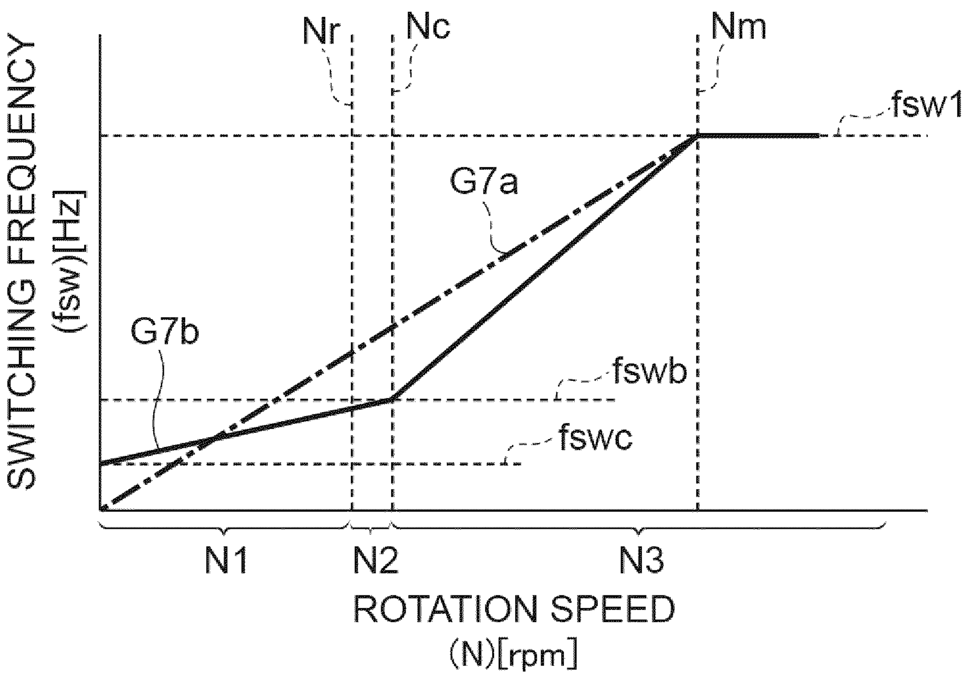
Nr
Nc
Nm
fsw1
G7a
G7b
fswb
fswc
SWITCHING FREQUENCY
(fsw)[Hz]
N1
N2
N3
ROTATION SPEED
(N)[rpm]

Fig.9

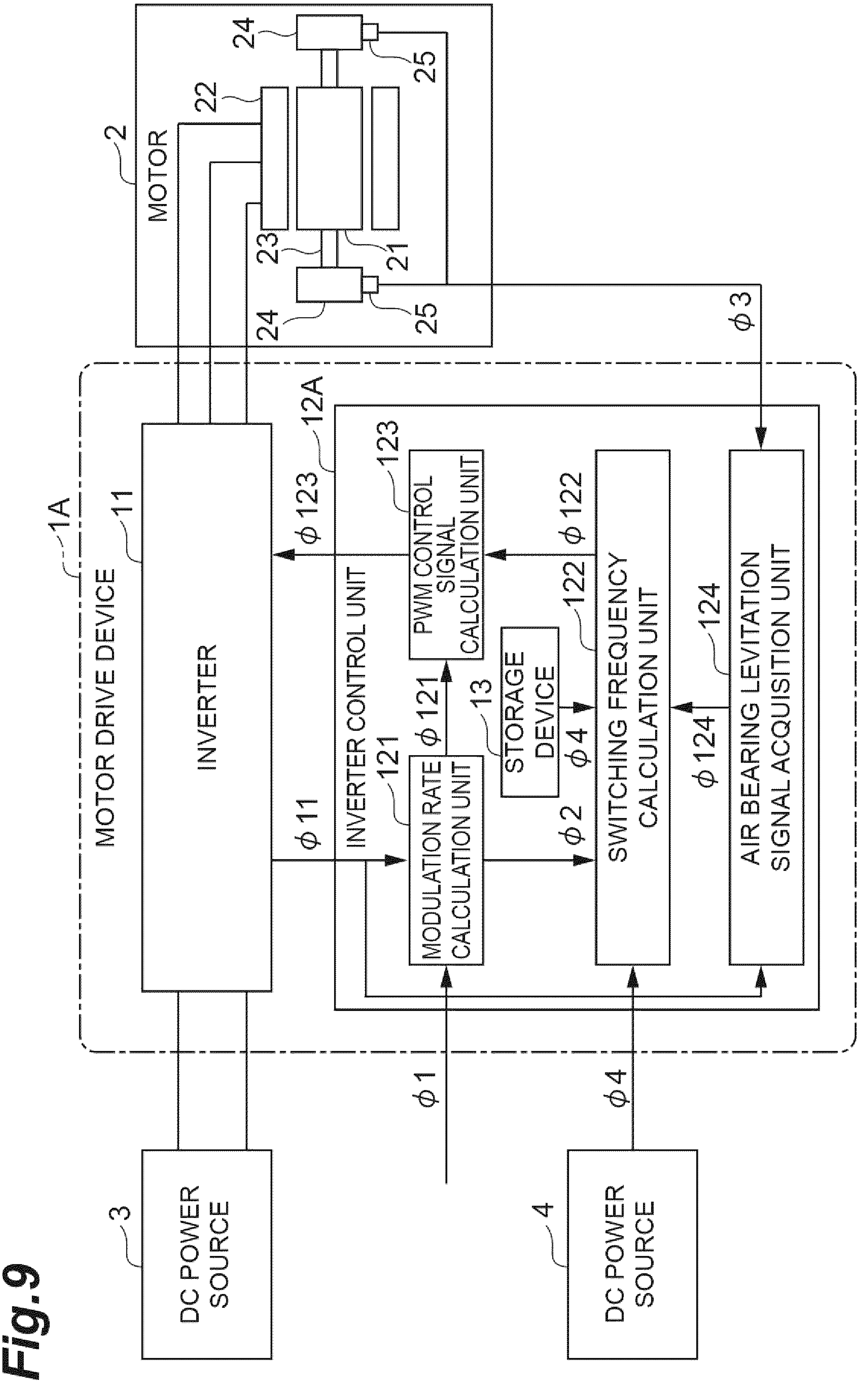

MOTOR
2
22
24
25
23
21
MOTOR DRIVE DEVICE
1A
11
INVERTER
12A
INVERTER CONTROL UNIT
PWM CONTROL SIGNAL CALCULATION UNIT
123
φ123
φ122
122
SWITCHING FREQUENCY CALCULATION UNIT
AIR BEARING LEVITATION SIGNAL ACQUISITION UNIT
124
φ124
φ3
STORAGE DEVICE
13
φ4
MODULATION RATE CALCULATION UNIT
121
φ121
φ11
φ2
φ1
DC POWER SOURCE
3
4

*Fig.10*

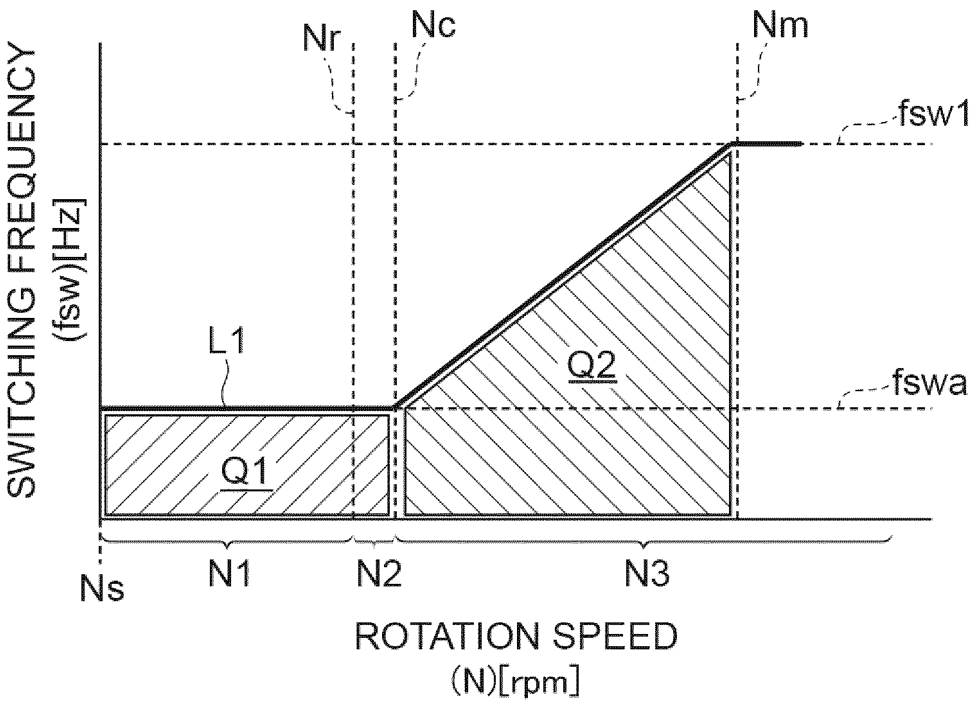
SWITCHING FREQUENCY
(fsw)[Hz]
Nr
Nc
Nm
fsw1
L1
Q2
fswa
Q1
Ns
N1
N2
N3
ROTATION SPEED
(N)[rpm]

*Fig.11*

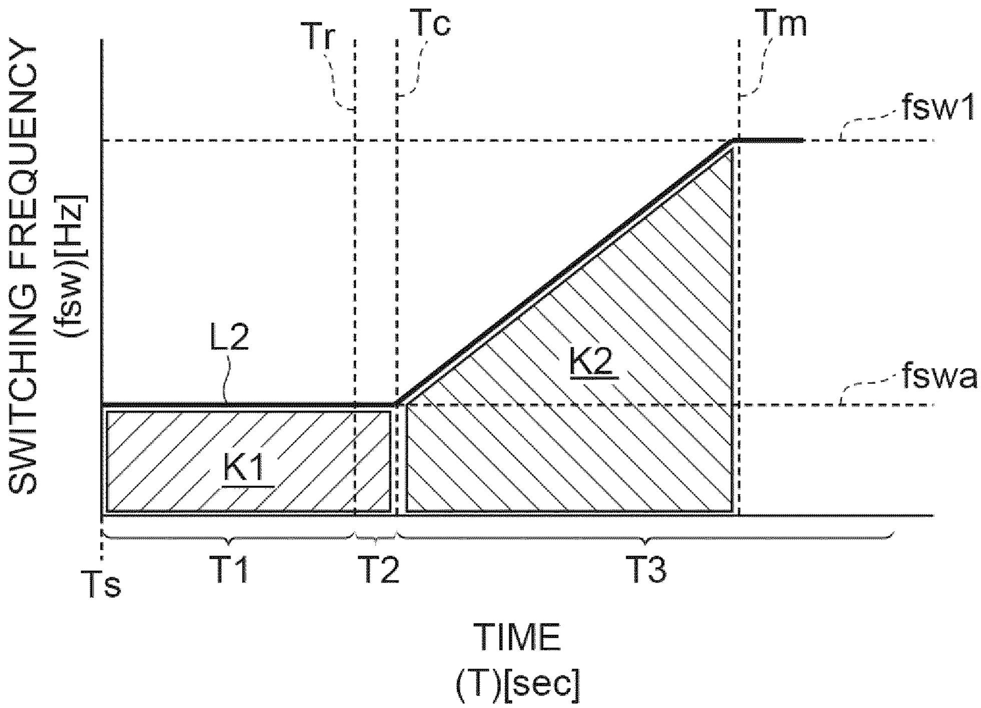
SWITCHING FREQUENCY
(fsw)[Hz]
Tr
Tc
Tm
fsw1
fswa
L2
K1
K2
Ts
T1
T2
T3
TIME
(T)[sec]

## INTERNATIONAL SEARCH REPORT

International application No.
**PCT/JP2023/037732**

**A. CLASSIFICATION OF SUBJECT MATTER**

***H02P 27/08***(2006.01)i
FI: H02P27/08

According to International Patent Classification (IPC) or to both national classification and IPC

**B. FIELDS SEARCHED**

Minimum documentation searched (classification system followed by classification symbols)

H02P27/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2000-270507 A (MATSUSHITA SEIKO CO LTD) 29 September 2000 (2000-09-29) paragraphs [0001]-[0082], fig. 1-27 | 1-15 |
| A | JP 2012-228137 A (DAIKIN IND LTD) 15 November 2012 (2012-11-15) paragraphs [0001]-[0079], fig. 1-8 | 1-15 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 November 2023** | **12 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/037732**

| Patent document cited in search report | Publication date (day/month/year) | Patent family member(s) | Publication date (day/month/year) |
|---|---|---|---|
| JP 2000-270507 A | 29 September 2000 | (Family: none) | |
| JP 2012-228137 A | 15 November 2012 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 10225079 A